# EUROPÄISCHE PATENTSCHRIFT

(11) **EP 0 502 290 B1**
(45) Veröffentlichungstag und Bekanntmachung des Hinweises auf die Patenterteilung: **31.08.1994**
(21) Anmeldenummer: 92100631.8
(22) Anmeldetag: 16.01.1992
(51) Int. Cl.: B60R 21/20

(54) **Befestigung einer Beifahrer-Gaskisseneinheit**
Fixation of a passenger airbag module
Fixation d'un module de coussin d'air pour passager

(30) Priorität: 02.03.1991 DE 4106685
(43) Veröffentlichungstag der Anmeldung: 09.09.1992
(73) Patentinhaber: MERCEDES-BENZ AG, 70327 Stuttgart (DE)
(72) Erfinder: Müller, Manfred, W-7301 Deizisau (DE); Henseler, Wolfgang, W-7400 Tübingen (DE); Fischer, Thomas, W-7260 Calw-Stammheim (DE); Uphues, Hans-Wilhelm, W-7037 Magstadt (DE); Petkovic, Zivojin, W-7030 Böblingen (DE)

(56) Entgegenhaltungen:
- DE-A- 2 043 255
- DE-A- 2 334 549
- DE-A- 4 016 681

## Beschreibung

Die Erfindung betrifft die Befestigung einer Beifahrer-Gaskisseneinheit im oberen Bereich einer Armaturentafel eines Kraftwagens mittels eines aus Flachmaterial bestehenden Halters, der einerseits am Gehäuse der Gaskisseneinheit und andererseits fahrzeugfest festlegbar ist.

Eine derartige Anordnung ist bereits der DE-A-40 16 681 als bekannt zu entnehmen.

Während des Entfaltungsvorganges eines derartigen Gaskissens treten zwei Effekte auf, die unerwünscht bzw. nachteilig sind. So bekommt das sich entfaltende Gaskissen in einer ersten Phase Kontakt mit der Windschutzscheibe, was zu einer Beschädigung derselben führen kann. Weiterhin treten in einer späteren Phase hohe Massenkräfte beim Abbremsen des entfalteten Gaskissens auf, die über die Gaskissenanbindung in das Gehäuse und auf die Modulanbindung übertragen werden.

Der vorliegenden Erfindung lag daher die Aufgabe zugrunde, eine Befestigung einer Beifahrer-Gaskisseneinheit so auszugestalten, daß diesen negativen Erscheinungen entgegengewirkt wird.

Diese Aufgabe wird bei einer gattungsgemäßen Befestigung erfindungsgemäß dadurch gelöst, daß der aus Flachstahl bestehende Halter unter dem Bodenbereich des Gehäuses entlanggeführt und dort mit diesem verbunden ist, daß er dieses beidseitig seitlich überragt und mit Abstand von diesem fahrzeugfest festlegbar ist, derart, daß zwischen den seitlichen Enden des Gehäuses und den seitlich im Abstand davon angeordneten fahrzeugfesten Befestigungspunkten des Halters dieser einen der Energieaufnahme dienenden, verformbaren Brückenbereich bildet, der bei Belastung ein Verdrehen des Halters in beide Richtungen um seine Längsachse zuläßt.

Der Gegenstand der Erfindung soll im folgenden anhand eines in der Zeichnung dargestellten Ausführungsbeispieles näher erläutert werden.

In der Zeichnung Zeigen
- Figur 1: eine perspektivische Darstellung einer Beifahrer-Gaskisseneinheit, von außen durch die Windschutzscheibe gesehen,
- Figur 2: eine Ansicht in Richtung des Pfeiles II in Figur 1, und
- Figur 3: in größerem Maßstab eine Draufsicht auf den Halter.

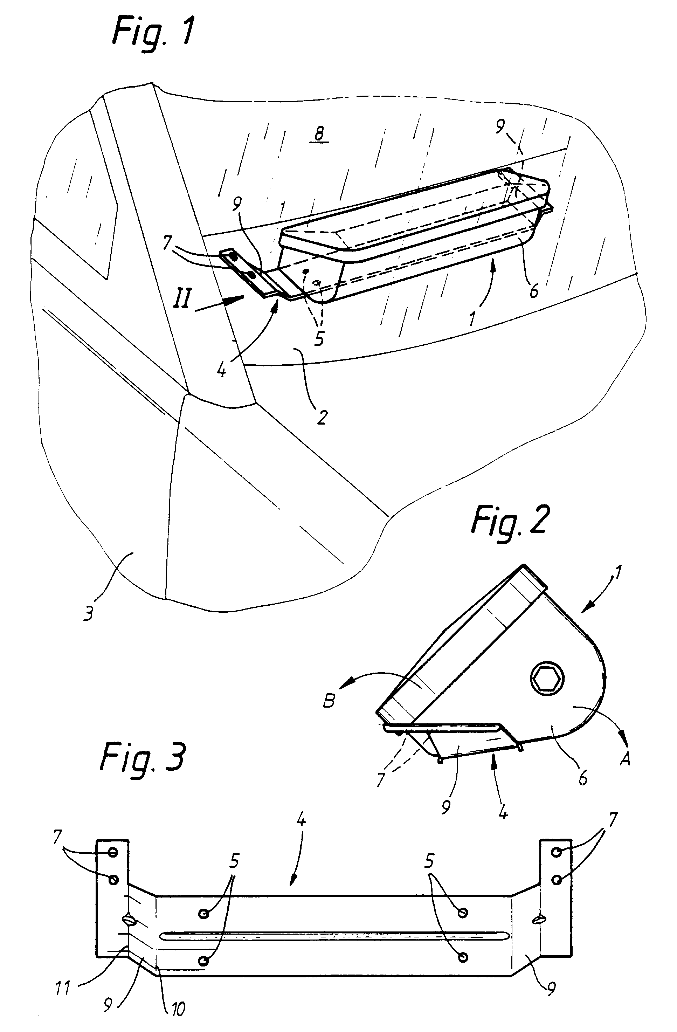

Eine Beifahrer-Gaskisseneinheit 1 ist im oberen Bereich einer Armaturentafel 2 eines in Figur 1 bereichsweise angedeuteten Kraftwagens 3 angeordnet. Ihrer Befestigung im Fahrzeug dient ein aus Flachstahl hergestellter Halter 4, der in den Punkten 5 mit dem Gehäuse 6 der Gaskisseneinheit 1 und in den Punkten 7 mit einem nicht dargestellten fahrzeugfesten Bauteil verschraubt ist.

Um beim Kontakt des nicht dargestellten, sich entfaltenden Gaskissens mit der Windschutzscheibe 8 ein gewisses Verschwenken der Gaskisseneinheit 1 in Richtung des Pfeiles 'A' und beim Abbremsen des entfalteten Gaskissens in Richtung des Pfeiles 'B' zu ermöglichen, ist der Halter 4 auf besondere Weise ausgebildet.

Und zwar überragt der Halter 4 das Gehäuse 6 beidseitig in Fahrzeugquerrichtung, die Befestigungspunkte 5 und 7 liegen in Fahrzeugquerrichtung beabstandet zueinander und zwischen ihnen bildet der Halter 4 einen der Energieaufnahme dienenden, verformbaren bzw. verdrehbaren Brückenbereich 9, der bei entsprechender Belastung der Gaskisseneinheit 1 ein Verdrehen des Halters 4 sowohl in Richtung des Pfeiles 'A' als auch in Richtung des Pfeiles 'B' (Figur 2) zuläßt.

Im Brückenbereich 9 weist der Halter 4 jeweils eine doppelte Abwinkelung 10, 11 auf, derart, daß die fahrzeugseitigen Befestigungspunkte in Einbaulage höher liegen als die gehäuseseitigen Befestigungspunkte 5.

Schließlich sind die Ausbildung des Halters 4 und die Anordnung der Befestigungspunkte so aufeinander abgestimmt, daß die fahrzeugseitigen Befestigungspunkte 7 auch in Fahrzeuglängsrichtung gesehen einen Versatz gegenüber den gehäuseseitigen Befestigungspunkten 5 aufweisen.

## Patentansprüche

1. Befestigung einer Beifahrer-Gaskisseneinheit (1) oberen Bereich einer Armaturentafel (2) eines Kraftwagens mittels eines aus Flachmaterial bestehenden Halters (4), der einerseits am Gehäuse (6) der Gaskisseneinheit und andererseits fahrzeugfest festlegbar ist,
**dadurch gekennzeichnet,**
daß der aus Flachstahl bestehende Halter (4) unter dem Bodenbereich des Gehäuses (6) entlanggeführt und dort mit diesem verbunden ist, daß er dieses beidseitig seitlich überragt und mit Abstand von diesem fahrzeugfest festlegbar ist, derart, daß zwischen den seitlichen Enden des Gehäuses (6) und den seitlich im Abstand davon angeordneten fahrzeugfesten Befestigungspunkten (7) des Halters (4) dieser einen der Energieaufnahme dienenden, verformbaren Brückenbereich (9) bildet, der bei Belastung ein Verdrehen des Halters (4) in beide Richtungen um seine Längsachse zuläßt.

2. Befestigung nach Anspruch 1,
**dadurch gekennzeichnet,**
daß der Halter (4) in seinen das Gehäuse (6) seitlich überragenden Bereichen einen derartigen Verlauf aufweist, daß seine fahrzeugseitigen Befestigungspunkte (7) auch in Fahrzeuglängsrichtung einen Versatz gegenüber den gehäuseseitigen Befestigungspunkten (5) aufweisen.

3. Befestigung nach Anspruch 1,
**dadurch gekennzeichnet,**
daß der Halter (4) in seinen das Gehäuse (6) seitlich überragenden Bereichen jeweils eine doppelte Abwinkelung (10, 11) aufweist, derart, daß die fahrzeugseitigen Befestigungspunkte (7) in Einbaulage höher liegen als die gehäuseseitigen Befestigungspunkte (5).

4. Befestigung nach einem oder mehreren der vorhergehenden Ansprüche,
**dadurch gekennzeichnet,**
daß der Halter (4) einstückig auf ganzer Länge unter dem Gehäuse (6) hindurchgeführt ist.

## Claims

1. Mount of a front seat passenger airbag unit (1) in the upper area of a dashboard (2) of a motor vehicle by means of a holder (4) which consists of flat material and on the one hand can be attached to the housing (6) of the airbag unit and on the other hand can be attached securely to the vehicle, characterized in that the holder (4) consisting of flat steel is guided along below the floor area of the housing (6) and is connected there to the latter, in that it projects laterally beyond the latter on both sides and can be attached securely to the vehicle at a distance from said housing, in such a way that between the lateral ends of the housing (6) and the mounting points (7) of the holder (4), arranged fixed to the vehicle laterally at a distance from said housing, said holder forms a deformable bridge area (9) which serves to absorb energy and during loading permits the holder (4) to rotate in both directions about its longitudinal axis.

2. Mount according to Claim 1, characterized in that the holder (4) in its areas projecting laterally beyond the housing (6) extends in such a way that its vehicle-side mounting points (7) also have in the longitudinal direction of the vehicle an offset with respect to the housing-side mounting points (5).

3. Mount according to Claim 1, characterized in that the holder (4) has in its areas projecting laterally beyond the housing (6) in each case a doubled angled-off portion (10, 11), in such a way that the vehicle-side mounting points (7) are located at a higher point in the installation position than the housing-side mounting points (5).

4. Mount according to one or more of the preceding claims, characterized in that the holder (4) is guided through in one piece over its entire length below the housing (6).

## Revendications

1. Fixation d'un module de coussin d'air (1) pour passager (personne assise à côté du conducteur) dans la zone supérieure du tableau de bord (2) d'un véhicule automobile au moyen d'un support (4) fait d'un matériau plat, qui peut être attaché d'une part au boîtier (6) du module de coussin d'air et d'autre part de façon fixe au véhicule, **caractérisée** en ce que le support (4), en acier plat est disposé sous le fond du boîtier (6), le long de celui-ci, et est fixé à cet endroit à ce boîtier, et que le support dépasse latéralement des deux côtés du boîtier et peut être attaché de façon fixe au véhicule à distance du boîtier, l'agencement étant tel qu'entre les extrémités latérales du boîtier (6) et les points de fixation (7) du support (4) au véhicule, points qui sont disposés latéralement à distance de ces extrémités latérales, le support (4) forme une zone de pont (9) déformable, servant à absorber de l'énergie, qui autorise, en charge, une torsion du support (4) dans les deux sens autour de son axe longitudinal.

2. Fixation selon la revendication 1, caractérisée en ce que, dans ses zones dépassant latéralement du boîtier (6), le support (4) présente une allure telle que ses points de fixation (7) côté véhicule présentent également dans le sens de la longueur du véhicule un décalage par rapport aux points de fixation (5) côté boîtier.

3. Fixation selon la revendication 1, caractérisée en ce que, dans chacune de ses zones dépassant latéralement du boîtier (6), le support (4) comporte un double coude (10, 11) agencé de manière que les points de fixation (7) côté véhicule sont situés plus haut, à la position montée, que les points de fixation (5) côté boîtier.

4. Fixation selon une ou plusieurs des revendications précédentes, caractérisée en ce que le support (4) s'étend d'un seul tenant sur toute la longueur sous le boîtier (6).
